# EUROPEAN PATENT SPECIFICATION

(11) **EP 3 147 478 B1**
(45) Date of publication and mention of the grant of the patent: **28.11.2018**
(21) Application number: 16191622.6
(22) Date of filing: 12.12.2014
(51) Int. Cl.: F02B 41/10, F01N 3/00, F01N 3/20, F02B 29/04, F02B 37/00, F01N 3/025, F02D 41/00, F02B 37/24, F02B 39/02, F02M 26/08, F02D 41/40, F02D 41/02

(54) **IMPROVED TURBOCOMPOUND SYSTEM**
VERBESSERTES TURBOCOMPOUNDSYSTEM
SYSTEME A TURBORECUPERATION AMELIORE

(30) Priority: 20.12.2013 IT MI20132165
(43) Date of publication of application: 29.03.2017
(62) Divisional of application: 14197830.4
(73) Proprietor: FPT Industrial S.p.A., 10156 Torino (IT)
(72) Inventor: D'EPIRO, Clino, 10091 ALPIGNANO (IT)
(74) Representative: Franzolin, Luigi

(56) References cited:
- EP-A1- 2 053 208
- EP-A1- 2 341 225
- DE-A1-102004 062 492
- US-A1- 2006 162 335
- US-A1- 2011 094 485

## Description

### Field of application of the invention

The present invention relates to the field of turbocompound systems, i.e. those systems in which a turbine fed with the exhaust gases of an internal combustion engine has the axis thereof connected to the vehicle driving shaft so as to cooperate with the internal combustion engine or with an electric generator.

Such a turbine is normally named "power turbine" or "compound turbine".

### Prior art

The thermal management of the ATS (After Treatment System) is crucial to guarantee an efficient conversion of the pollutants contained in the exhaust gases.

Thus, rapidly warming up the devices which form the ATS and keeping them at a temperature either equal to, or higher than the activation temperature is the fundamental objective pursued by manufacturers of vehicles, above all industrial vehicle.

The ATS comprises, for example, the DOC (Diesel Oxidation Catalyst) and the SCR (Selective Catalytic Reduction), but other devices may be present.

It is indispensable for some of such devices to reach temperatures in the order of 250 - 300°C to be able to eliminate the pollutants present in the exhaust gases. Usually, a technique used to promote the ATS warm up is to arrange a valve, so-called flap, upstream of the ATS, immediately downstream of the turbine(s).

The closing of such a valve determines a counterpressure (backpressure) in the exhaust manifold, which makes the internal combustion engine perform a further pumping work, which must be overcome by increasing the fuel injection and thus the temperature of the engine and of the respective exhaust gases, which promote the ATS warm up.

### Summary of the invention

It is the object of the present invention to disclose a system for promoting ATS warm up, and more in general for improving ATS efficiency in any operative condition of the engine/vehicle.

The underlying principle of the present invention is to arrange a variable geometry power turbine on the exhaust gas line, downstream of the ATS, i.e. downstream of the DOC and of the SCR, so as to increase in average the counterpressure on the exhaust line, and thus improve ATS efficiency.

It is understood that the ATS is unique, meaning that there are no further ATS devices downstream of the power turbine. Thus, the power turbine is adjusted so as to guarantee an appreciable counterpressure in any operating condition of the internal combustion engine and therefore not only at high loads and/or rpm.

Therefore, the turbine is adjusted to reduce the transit speed of the exhaust gases through the ATS according to the Space x Velocity principle, and instead of dissipating the energy contained in the gases, this is recovered by the turbine which converts it into mechanical energy which can be exploited in various manners. The fact of being arranged downstream of the ATS and of being of the variable geometry type allows to vary, in controllable manner, the permanence time of the gases inside the ATS, with pressure increments higher than 1 bar relative, allowing both a more rapid warm up and, subsequently, an improvement of ATS efficiency, to the extent that its size can be reduced, the efficiency being equal.

Advantageously, the effusion section of the turbine distributor may be controlled as a function of the exhaust gas temperature.

The energy generated by the power turbine may be surrendered to the driving shaft or to an electric generator for any further purpose.

If the power turbine is operatively connected to the transmission, it may be controlled also as a function of the torque required from the internal combustion engine. Thus, according to a preferred variant of the invention, at least two different power turbine control maps are stored in a control unit of the power turbine itself: one control map is used during the warm up step, i.e. is aimed at the rapid warm up of engine and ATS, and another map is used in thermal regime conditions, i.e. when the ATS has reached the activation temperature of its purification devices. Preferably, such a second control map may be aimed at the minimum specific consumption by carefully balancing engine efficiency in itself and the energy recovery on the power turbine.

The power turbine, being of the variable geometry type, may be controlled to determine a deceleration of the flow of gases which cross the ATS also after the warm up step. This allows to treat the exhaust gases more efficiently, and thus to be able, the operating conditions of a traditional turbocompound system being equal, to reduce the extension of the active surface and thus the size of some of the purification devices which form the ATS. But this also affects the warm up time because the smaller size devices may be warmed up with less thermal energy, because of the smaller external dispersing surface and for the lower thermal inertia related to the smaller mass to be heated.

According to a further preferred variant of the invention, the power turbine is of the adjustable blade type, and thus can change its effusion section but also the angle of impact of the gas injected by the nozzles in the scroll with the blades of its impeller. Preferably, when the turbine is of the adjustable blade type, the blades may be oriented so that the angle of impact of the gas on the blades of the impeller slows down the rotational motion of the impeller. If the turbine is connected to the driving shaft, it is apparent that the impeller cannot reverse its direction of movement because it is constrained to the driving shaft, but this implies the transfer of braking torque to the internal combustion engine.

Therefore, the internal combustion engine must overcome the pumping work afforded by the counterpressure generated by the power turbine and also the negative work transferred by the latter to the driving shaft. Thus, by virtue of this preferred variant of the invention, the warm up procedure is even faster.

At the end of the warm up step, the power turbine may be adjusted so as to afford a negative torque to the internal combustion engine during the engine braking step.

According to a further variant of present invention, at the end of the warm up step, the power turbine may be adjusted also as a function of the amount of urea-based aqueous solution which is injected into the ATS upstream of the SCR, thus defining an open Rankine cycle.

Vice versa, the injection of urea-based aqueous solution may be appropriately controlled as a function of the control carried out on the power turbine. Indeed, the improvement of converter efficiency may allow to eliminate the excesses of aqueous solution injections with respect to the reaction stoichiometry, which injections are generally necessary to increase the conversion rate of the converter in sub-optimal operating temperature conditions. This considerably reduces the formation of crystalline urea deposits.

According to a further preferred of the invention, the ATS may be provided with a secondary fuel injector, i.e. an injector arranged on the exhaust gas line, upstream at least of the particulate filter, to inject fuel during the regeneration of the particulate filter. According to such a preferred variant of the invention, such an injector may be used in cooperation with the power turbine also during other operating conditions of the propulsion system, i.e. to implement a Brayton cycle, thus capable of exploiting the exhaust gas line of the internal combustion engine as active part of the vehicle mechanical energy generation. In other words, the exhaust line itself may be controlled so as to provide an overboost to the system, and thus to the vehicle. According to a further preferred variant of the invention, the power turbine transfers its mechanical work directly to the vehicle wheels, thus it is connected to the driveline downstream of the gearbox.

In other words, the power turbine is connected to the driving shaft indirectly, by means of the driveline, and in particular downstream of the gearbox, preferably to the secondary shaft of the gearbox, which is often provided with arrangement for a power takeoff. Such a connection may be made, for example, by means of appropriate gearing or by means of a traditional hydraulic coupling.

According to an improvement of such a preferred variant of the invention, the power turbine is operatively connected to the secondary of the gearbox by means of a continuously variable ratio transmission, also known with the acronym CVT. The particular suggested arrangement implies advantages in terms of energy and controllability.

According to a further preferred variant of the invention, the power turbine is associated to an electric generator motor so as to convert the respective mechanical energy into electric energy, particularly during the warm up steps of the ATS.

It is the object of the present invention an improved turbocompound system as described in claim 1.

It is also an object of the present invention a control method of the aforesaid turbocompound.

A further object of the present invention is a terrestrial vehicle implementing the aforesaid turbocompound system.

### Brief description of the figures

Further objects and advantages of the present invention will be apparent from the following detailed description of an embodiment (and variants) thereof and from the accompanying drawings provided merely by way of non-limitative example, in which:
figure 1 shows an approximate diagram of the improved turbocompound system object of the present invention,
figure 2 shows a diagram showing an example of dimensional variable of the SCR of the diagram in figure 1, as a function of the counterpressure on the exhaust line,
figure 3 shows a speed triangle of the power turbine in figure 1, in a specific operating condition.

The same reference numbers and letters in the figures refer to the same elements or components.

### Detailed description of embodiments

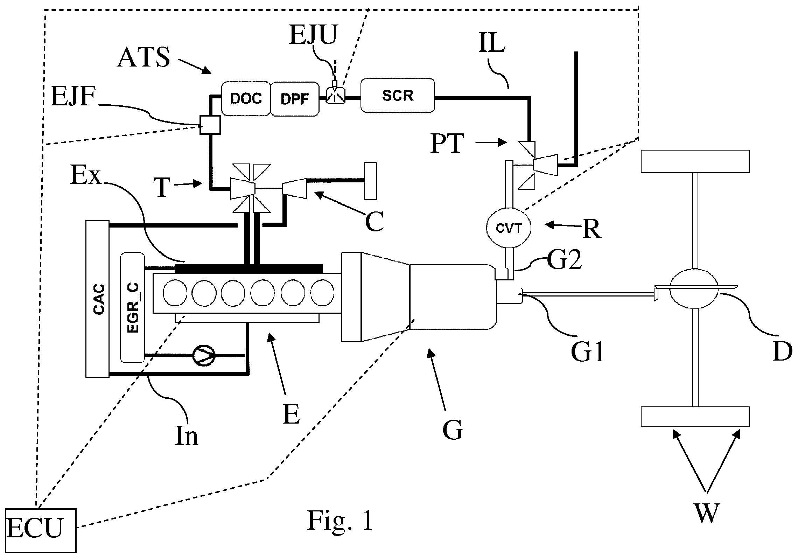

According to figure 1, an internal combustion engine E, e.g. a diesel engine, has an intake manifold In and an exhaust manifold Ex. A turbosupercharger unit TC defines a first, possibly optional, supercharging stage of the internal combustion engine with the first turbine T operatively arranged immediately downstream of the exhaust manifold. The compressor C, guided by the first turbine T, aspirates fresh air from the environment and compresses it, while an intercooler CAC cools the compressed air down before it enters into the intake manifold In.

An exhaust gas recirculation system EGR may be implemented. Preferably, it is of the "high-pressure" type, known in itself, meaning that recirculation is operated by tapping exhaust gases upstream of the first turbine and by introducing such exhaust gases into the intake manifold In downstream of the compressor C.

This does not mean that a low-pressure circulation cannot be operated, i.e. by tapping exhaust gases downstream of the compressor turbine and upstream of the turbocompound and reintroducing them into the intake line upstream of the compressor(s).

Preferably, the recirculated exhaust gas is preventively cooled, e.g. by means of a separate EGR Cooler.

A second turbine PT, called power turbine, is arranged on the exhaust line IL, downstream of the first turbine T, if present, according to the exhaust gas flow.

According to the present invention, the power turbine PT is of the variable geometry type and is arranged on the exhaust gas line IL, downstream of the ATS, i.e. downstream of the DOC and of the SCR. Preferably, a particulate filter is arranged downstream of the DOC and upstream of the SCR.

EJU means are arranged immediately upstream of the SCR to inject a urea-based mixture for abating NOx in cooperation with the SCR.

The effusion section of the power turbine may be controlled as a function of the temperature of the exhaust gases so as to slow down the effusion of the exhaust gases, thus improving the heat exchange with the purification devices and so as to make a counterpressure in the internal combustion engine, which promotes, as described above, the heating of the engine and of the ATS in warm up conditions.

Preferably, in thermal regime conditions, i.e. at the end of the ATS warm up step, the power turbine may be adjusted as a function of the driving torque required to the internal combustion engine. In particular, the reduction of the effusion section of the turbine becomes directly proportional to the torque required to the internal combustion engine and inversely proportional to the temperature of the exhaust gases.

According to a preferred variant of the invention, at least two different power turbine control maps are stored in a control unit thereof: one control map is used during the warm up step and the other is used in thermal regime conditions, i.e. when the ATS has reached the activation temperature of its purification devices.

According to a further preferred variant of the invention, the power turbine PT is operatively connected either directly or indirectly to the driving shaft of the internal combustion engine and is of the adjustable blade type. Thus, a connection of the power turbine to the vehicle transmission means a connection to the driving shaft or to any other member involved in the transmission of motion to the wheels. In particular, the power turbine can change its effusion section but also the angle of impact of the gas injected by the nozzles of the scroll with the blades of its impeller. Preferably, when the distributor of the turbine is of the adjustable blade type, its blades may be oriented so that the angle of impact of the gas on the blades of the impeller slows down the rotational motion of the impeller. If the turbine is connected to the driving shaft, it is apparent that the impeller cannot reverse its direction of movement because it is constrained to the shaft of the internal combustion engine, but this implies the transfer of braking torque to the internal combustion engine.

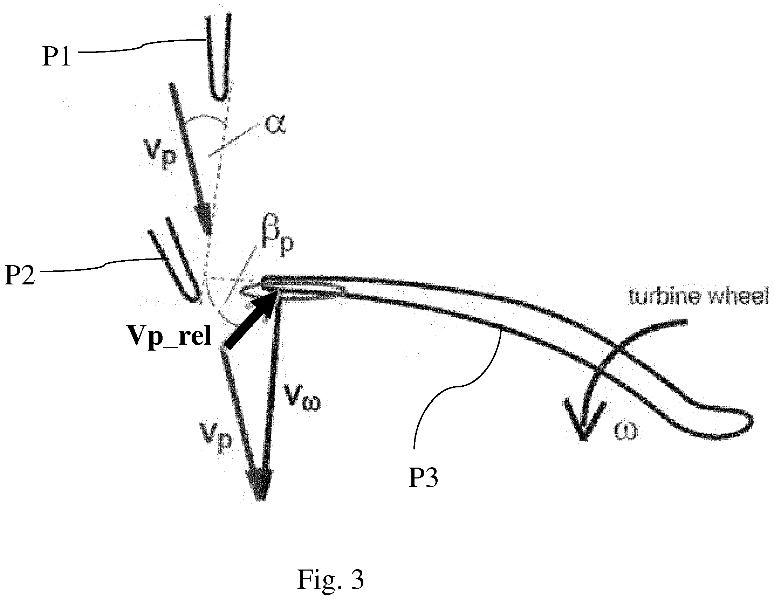

Figure 3 shows an example of a speed triangle applied to a power turbine adapted to afford braking torque to the internal combustion engine.

Figure 3 shows a speed triangle of the power turbine in figure 1, in a specific operating condition, in particular during the generation of braking torque. Only two adjacent moveable blades P1 and P2 and a blade of the impeller P3 are shown. It is worth noting that the moveable blades P1 and P2 are oriented so as to define an exhaust gas flow output angle α, which in the figure is identified by its absolute speed vector Vp. Such a flow encounters the blade of the impeller P3, in turn having angular *ω* and peripheral speed Vω, according to the vector Vp rel, resulting from the vector sum of the two vectors Vp and Vω. Such a speed makes the flow impact against the blades of the turbine wheel creating an aerodynamic resistance and thus a drawing of torque.

Therefore, the internal combustion engine must overcome the pumping work afforded by the counterpressure generated by the power turbine and also the negative work transferred by the latter to the driving shaft.

According to a further preferred variant of the present invention, the power turbine, at the end of the warm up step may be adjusted to brake the engine E in engine brake activated conditions.

When the engine brake condition is active, the internal combustion engine is driven by the inertia of the vehicle without introduction of the fuel. Therefore, it works as a volumetric pump, which may or may not be provided with compressed air release systems after dead top center, which pushes air to the intake manifold to the exhaust.

It is apparent that the average increase of the backpressure induces the engine E to draw more mechanical energy and to push the air towards the exhaust manifold thus braking the vehicle further.

According to the present invention, it is not only possible to raise the backpressure by means of the power turbine but it is also possible to transfer the negative torque directly to the engine or to the driveline of the vehicle.

According to a further preferred variant of the present invention, the power turbine, at the end of the warm up step, may also be adjusted as a function of the amount of urea-based aqueous solution which is injected into the ATS upstream of the SCR. Indeed, such an aqueous solution evaporates completely at high temperature and is converted into ammonia in part, and consequently increases the mass flow rate and volumetry of the gas impacting on the power turbine.

The ammonia-based aqueous solution undergoes the following transformations:
- pumping in the ATS upstream of the SCR, by means of said EJU injector,
- evaporation, because of the exhaust gas temperature,
   - expansion through the power turbine.

In other words, it is the transformation sequence of an open Rankine (or Hirn) circuit, i.e. without recovery of fluid by means of condensation.

It is worth noting that the aqueous solution flow directly depends on the amount of Nox to be converted and eliminated. But such an amount is also proportional to the SCR converter efficiency, which in turn is proportional to the temperature and to the gas pressure therein. Therefore, also after having completed the warm up step, the increment of pressure obtained by adjusting the effusion section of the power turbine allows to raise the SCR purification efficiency and thus allows, at the same time, to reduce the amount of urea-based solution injected into the ATS and to recover the pumping energy of the internal combustion engine as mechanical energy to the power turbine.

Advantageously, the flow of injected aqueous solution can be increased to obtain an overboost from the power turbine, and vice versa counterpressure generated by the power turbine can be increased to reduce the amount of injected aqueous solution. Therefore, the power turbine control in thermal regime conditions is closely related to the injection of urea-based aqueous solution.

The practice of injecting fuel, either as post injections or by means of a specific EJF injector housed directly in the exhaust gas line IL upstream of the DPF, in order to regenerate the particulate filter DPF, is known.

According to a further preferred variant of the invention, the power turbine may be controlled in thermal regime conditions by the propulsion system, in combination with the additional injection of fuel, not to regenerate the DPF but to obtain further mechanical energy from the power turbine. The exhaust gas portion related to the fuel injected by means of post injection evolves according to a transformation cycle comprising:
- a compression at pressure higher than ambient pressure (backpressure),
- a heating (post injected fuel oxidation) at constant pressure, and
- an expansion by means of the power turbine.

It is substantially a positive work Brayton cycle, which not only allows to obtain further mechanical energy on the power turbine but also allows to improves DOC + DPF efficiency because reactions are triggered more easily at lower temperatures as the counterpressure increases.

At most, the forced regeneration procedures of the DPF are eliminated/reduced because the natural reactions are greatly facilitated. Furthermore, if the vehicle is provided with EGR, the average pressure increase on the exhaust line facilitates the exhaust gas recirculation.

The effects of both the ammonia expansion and the fuel combustion injected by means of either post injections or a specific injector arranged upstream of the particulate filter are appreciable above all in combination with a variable geometry power turbine, which raises the average pressure in the exhaust line over the entire curve of use of the engine, thus increasing the compression ratio at which the foregoing gaseous fractions both evolve. Advantageously, the efficiency of both the Rankine and Brayton cycles increases with the ratio between the maximum and minimum pressures to which the respective fluid evolves.

The increase of efficiency related to the exploitation of these two effects becomes negligible in average without the possibility of controlling such pressure ratio by adjusting the power turbine geometry.

Furthermore, the recovered mechanical energy contributes to improving the efficiency of the system contrary to the flaps arranged on the exhaust line and/or on the intake line of the internal combustion engine E.

Advantageously, the fact of operating at pressures which are higher in average than those known, i.e. at pressure values in the order of 1-2 bar relative, allows to use centripetal turbine similar to the turbines of the turbosupercharger assembly T, C, instead of axial turbines which have degree of reaction close to zero (impulse turbines) as power turbine.

Thus, the present invention not only allows to reduce the ATS warm up time the but also allows to reduce the size of the ATS purification components themselves, and allows to exploit the raise of pressure along the exhaust line in positive manner recovering the mechanical energy which may be converted into electric energy, by connecting the power turbine to an electric generator or may be surrendered to the transmission G1 of the vehicle.

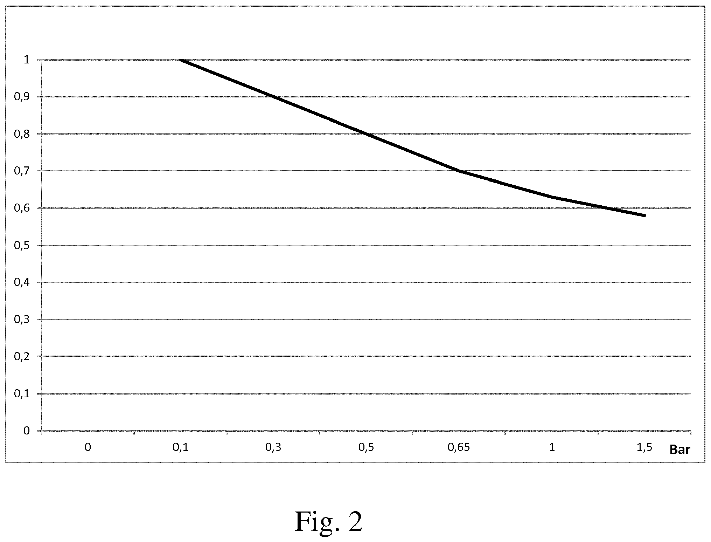

Figure 2 shows a diagram, which shows an example of reduction in size of the SCR as a function of the counterpressure on the exhaust line. It is apparent that the size of the SCR can be halved with a counterpressure of 1.5 bar relative (i.e. with respect to the atmospheric pressure).

According to a preferred embodiment of the present invention, the power turbine is connected to the transmission downstream of the transmission. Preferably, it is connected to the secondary shaft of the gearbox G1, preferably by means of a power takeoff G1, generally available in the gearboxes of heavy vehicles.

Advantageously, from the energy point of view, the connection to an element of the power chain very close to the wheels of the vehicle, and thus not subject to the torsional vibrations which are specific to the driving shaft, allows to eliminate the hydraulic damper coupling, typically used for the power turbines of turbocompound systems. Indeed, such a coupling usually implies an energy loss equal to at least 15% of that recovered by the wheel of the power turbine.

According to the present invention, the power turbine PR is connected to the gearbox either by means of gearings or by means of a traditional hydraulic coupling.

Preferably, the power turbine is operatively connected to the secondary of the gearbox by means of a continuously variable ratio transmission CVT.

Replacing the traditional hydraulic coupling with a CVT, given a small loss of transmission efficiency (4-5% with respect to a gear cascade), however allows to maintain the peripheral speed of the power turbine always in the optimal U/C range, i.e. effusion speed U of the gas divided by the peripheral speed C of the impeller, from which the fluid dynamic efficiency of the turbine itself depends.

Thus, the power turbine can always be maintained at the operating speed at which it expresses the best efficiency by means of a CVT. This allows an excellent thermodynamic energy recovery downstream of the ATS.

In addition to improving recovery efficiency, this has the effect of uncoupling the variable geometry management of the power turbine from the rotation speed of the power turbine without penalization. Thus, the foregoing turbine management procedures during the warm up step or thermal regime step, to minimize the specific consumption of fuel or to increase the power available at the wheels, may be put into practice by maintaining the power turbine in maximum efficiency conditions.

The variant which includes the connection of the power turbine to the driveline is synergetic with the fact of having arranged the power turbine downstream of the ATS.

The ATS is particularly large, thus the power turbine is distant from the engine. Therefore, by virtue of a preferred embodiment of the present invention it is easy to connect the power turbine directly onto the gearbox.

Furthermore, it implies the further advantage of affording torque to the wheels also when shifting, i.e. when the driving shaft is disconnected from the gearbox by means of clutch, thus being able to implement automatic or dual clutch gearboxes, usually employed to prevent the vehicle from slowing down when shifting. It is worth noting that all decelerations must then be recovered by burning additional fuel, and that shifting on a heavy vehicle may take even a few seconds.

Preferably, the secondary shaft G2 of the transmission is further connected to the drive wheels of the vehicle, e.g. by means of a differential D.

It is thus advantageous when shifting to
- control the internal combustion engine so as to increase the exhaust gas flow rate and temperature, and/or
- increase the injection of urea-based aqueous solution, and/or
- perform post injections of fuel to exploit the aforesaid Bryton cycle.

It is also advantageous to adjust the power turbine so as to increase the mechanical energy recovery with an obvious increase of the counterpressure.

If the combustion engine is controlled by the ECU to find a dynamic balance at a higher load because of the generated counterpressure, the effect of the power turbine is amplified, thus being able to supply the torque necessary to maintain a constant speed to the vehicle while the clutch is disconnected and the gearbox is shifting.

Such a control is rather easy to achieve if the gearbox is automatic or automated, it being possible to predict the shifting with sufficient advance and thus it being possible to control the fuel feed to the internal combustion engine accordingly.

Thus, according to the present invention, during the warm up step of the ATS, the power turbine is controlled so as to increase the counterpressure at the engine exhaust manifold. If the power turbine is of the adjustable blade type and the axis of the power turbine is connected to the driving shaft, the blades may be oriented so that the axis of the turbine transfers a negative torque to the internal combustion engine during the warm up step.

Therefore, the power turbine is controlled as a function of the exhaust gas temperature and, secondarily, as a function of the power requested from the internal combustion engine. The forgoing control operations may be advantageously implemented in a processing unit ECU by means of a program for computer which comprises encoding means for implementing one or more steps of the method when this program is run on a computer. Therefore, the scope of protection is intended to extend to said computer program and also to computer-readable means which comprise a recorded message, said computer-readable means comprising program encoding means for implementing one or more steps of the method, when said program is executed on a computer.

From the description above, a person skilled in the art will be able to implement the object of the invention without introducing further constructional details.

## Claims

1. Improved turbocompound system, the system comprising
- an internal combustion engine (E) having an exhaust manifold (Ex) and an exhaust line (IL) connected to and adjacent with the exhaust manifold,
- a single exhaust gas purification system (ATS) arranged on said exhaust line (IL),
- a power turbine (PT), arranged on the exhaust line (IL) downstream of said single purifying system (ATS),
wherein the power turbine (PT) has a variable geometry, controlled by processing means (ECU), to increase an average counterpressure on the exhaust line (IL), wherein said purification system comprises an SCR and first means (EJU) for injecting an urea-based aqueous solution controlled by said processing means (ECU) and **characterized in that** said processing means (ECU) are adapted to control said power turbine and said first injection means (EJU) in order to maximize a mechanical energy recovered by the power turbine, increasing at the same time a counterpressure at the exhaust line (IL) and a flow rate of urea-based aqueous solution, in order to exploit an open Rankine cycle.

2. System according to claim 1, wherein said exhaust line (IL) comprises a particulate filter (DPF) and second means (EJF) for injecting fuel in the exhaust line, upstream of said particulate filter, controlled by said processing means (ECU) and wherein said processing means (ECU) are adapted to control said power turbine and said second injection means (EJF) in order to maximize a mechanical energy recovered by the power turbine, increasing at the same time the counterpressure at the exhaust line (IL) and a flow rate of injected fuel, in order to exploit an open Bryton cycle.

3. System according to any one of the preceding claims, wherein said internal combustion engine (E) is further provided with an intake manifold and with a turbosupercharger unit (T, C) having a first turbine (T) arranged downstream of the exhaust manifold (Ex) and upstream of said purifying system (ATS).

4. System according to any one of the preceding claims, wherein said internal combustion engine (E) is further provided with EGR means and wherein said processing means (ECU) are adapted to control said variable geometry of said power turbine in order to facilitate an exhaust gas recirculation.

5. System according to claim 4, wherein said EGR means are high-pressure and/or low-pressure type.

6. System according to any one of the preceding claims wherein said power turbine is operatively connected to an electric generator to generate electric energy or wherein said power turbine is operatively connected to the vehicle transmission.

7. System according to claim 6, wherein said internal combustion engine (E) comprises a gearbox (G) and wherein the power turbine is operatively connected downstream of the gearbox, preferably to a secondary propeller shaft of the gearbox (G1).

8. System according to claim 7, wherein said gearbox (G) comprises a power takeoff (G2) and wherein said power turbine is operatively connected to the secondary propeller shaft of the gearbox (G1) by means of said power takeoff (G2).

9. System according to one of the claims 7 or 8, wherein said power turbine is operatively connected to the secondary propeller shaft of the gearbox (G1) by means of appropriate gearings or by means of a CVT gearbox controlled by said processing means (ECU).

10. System according to any one of the preceding claims 7-9, wherein the distributor of said power turbine has adjustable blades and wherein the blades can be adjusted so that an angle of impact of the exhaust gas on the turbine blades is such as to slow down the rotational motion of the impeller, transferring a braking torque to the vehicle transmission.

11. System according to claim 10, wherein said processing means are adapted to control the blade orientation so that the power turbine can generate a negative torque during the warm up of the purifying system (ATS) and/or in engine brake conditions.

12. System according to any one of the preceding claims 7 - 11, wherein said processing means (ECU) are adapted to control said power turbine in order to increment or to maximize a mechanical energy recovered by the power turbine and transferred to the vehicle transmission during a gear shifting.

13. System according to claim 12, wherein said processing means (ECU) are adapted to make the internal combustion engine find a dynamic balance at an higher load due to a counterpressure generated by the power turbine, amplifying the contribution of the power turbine during the gear shifting.

14. System according to any one of the preceding claims from 9 to 13, wherein said power turbine is operatively connected to the secondary shaft of the gearbox (G1) by means of a CVT gearbox controlled by said processing means (ECU), said processing means are adapted to control said CVT gearbox so that the speed of rotation of the power turbine is such that its efficiency is optimal.

15. Control method of an improved turbocompound system according to any one of the preceding claims, comprising the step of adjusting said variable geometry of the power turbine:
- during a warm up step of the ATS, in order to make the procedure itself faster and/or
- during a steady state thermal condition of the purification system (ATS), in order to minimize the injection of urea-based aqueous solution and/or
- during a steady state thermal condition of the purification system (ATS), in order to facilitate the exhaust gas recirculation EGR and/or
- during a steady state thermal condition of the purification system (ATS), in order to recover a predefined mechanical energy by means of the power turbine and/or
- during of an engine brake condition, to increase the pumping work of the internal combustion engine.

16. Method according to claim 15, wherein when the power turbine has adjustable blades, and is operatively connected to the vehicle transmission, the control method comprises a step of adjusting an orientation of the blades so that the power turbine generates and transfers braking torque to the vehicle transmission during the warm up of the purifying system (ATS) and/or in engine brake operation.

17. Method according to claim 16, wherein if the turbocompound system comprises second fuel injection means (EJF), said processing means (ECU) are adapted to
- command at least a fuel injection, and
- reduce an effusion section of the power turbine (PT) accordingly,
in order to increase a mechanical power recovered by the power turbine (PT).

18. Method according to any one of the preceding claims, wherein the turbocompound system comprises first means (EJU) for injecting an urea-based aqueous solution arranged on said exhaust line (IL) upstream of said ATS and controlled by said processing means, then said processing means are adapted to
- command at least a variation of injection of an urea-based aqueous solution, and
- reduce an effusion section of the power turbine (PT) accordingly,
in order to increase a mechanical power recovered by the power turbine (PT).

19. Terrestrial vehicle comprising an improved turbo compound system according to any one of the claims from 1 to 14.

20. Computer program comprising program code means adapted to perform the steps of any claim from 15 to 18, when such program is run on a computer.

21. Computer-readable means comprising a recorded program, said computer-readable means comprising program code means adapted to perform the steps according to the claims from 15 to 18, when said program is run on a computer.

## Patentansprüche

1. Verbessertes Turbo-Compound-System, wobei das System Folgendes umfasst:
- einen Verbrennungsmotor (E), der einen Abgaskrümmer (Ex) und eine Abgasleitung (IL) aufweist, die mit dem Abgaskrümmer verbunden und demselben benachbart ist,
- eine einzelne Abgasreinigungsanlage (ATS), die an der Abgasleitung (IL) angeordnet ist,
- eine Nutzturbine (PT), die an der Abgasleitung (IL) stromabwärts von der einzelnen Abgasreinigungsanlage (ATS) angeordnet ist,
wobei die Nutzturbine (PT) eine veränderliche Geometrie aufweist, die durch Verarbeitungsmittel (ECU) gesteuert wird, um einen durchschnittlichen Gegendruck an der Abgasleitung (IL) zu steigern, wobei die Reinigungsanlage einen SCR-Katalysator und erste Mittel (EJU) zum Einspritzen einer wässrigen Lösung auf Harnstoffbasis, gesteuert durch die Verarbeitungsmittel (ECU), umfasst, und **dadurch gekennzeichnet, dass** die Verarbeitungsmittel (ECU) dafür eingerichtet sind, die Nutzturbine und die ersten Einspritzmittel (EJU) zu steuern, um eine mechanische Energie, die durch die Nutzturbine zurückgewonnen wird, zu maximieren, wobei zur gleichen Zeit ein Gegendruck an der Abgasleitung (IL) und eine Durchflussmenge wässriger Lösung auf Harnstoffbasis gesteigert wird, um einen offenen Rankine-Zyklus zu nutzen.

2. System nach Anspruch 1, wobei die Abgasleitung (IL) einen Partikelfilter (DPF) und zweite Mittel (EJF) zum Einspritzen von Kraftstoff in der Abgasleitung, stromaufwärts vom Partikelfilter, gesteuert durch die Verarbeitungsmittel (ECU), umfasst und wobei die Verarbeitungsmittel (ECU) dafür eingerichtet sind, die Nutzturbine und die zweiten Einspritzmittel (EJF) zu steuern, um eine mechanische Energie, die durch die Nutzturbine zurückgewonnen wird, zu maximieren, wobei zur gleichen Zeit der Gegendruck an der Abgasleitung (IL) und eine Durchflussmenge eingespritzten Kraftstoffs gesteigert wird, um einen offenen Bryton-Zyklus zu nutzen.

3. System nach einem der vorhergehenden Ansprüche, wobei der Verbrennungsmotor (E) ferner mit einem Ansaugkrümmer und mit einer Turboladereinheit (T, C), die eine erste Turbine (T) aufweist, die stromabwärts vom Abgaskrümmer (Ex) und stromaufwärts von der einzelnen Abgasreinigungsanlage (ATS) angeordnet ist, versehen ist.

4. System nach einem der vorhergehenden Ansprüche, wobei der Verbrennungsmotor (E) ferner mit AGR-Mitteln versehen ist und wobei die Verarbeitungsmittel (ECU) dafür eingerichtet sind, die veränderliche Geometrie der Nutzturbine zu steuern, um eine Abgasrückführung zu erleichtern.

5. System nach Anspruch 4, wobei die AGR-Mittel vom Hochdruck- und/oder Niederdrucktyp sind.

6. System nach einem der vorhergehenden Ansprüche, wobei die Nutzturbine wirksam mit einem elektrischen Generator verbunden ist, um Elektroenergie zu erzeugen, oder wobei die Nutzturbine wirksam mit dem Fahrzeug-Antriebsstrang verbunden ist.

7. System nach Anspruch 6, wobei der Verbrennungsmotor (E) ein Getriebe (G) umfasst und wobei die Nutzturbine wirksam stromabwärts vom Getriebe (G), vorzugsweise mit einer sekundären Antriebswelle des Getriebes (G1), verbunden ist.

8. System nach Anspruch 7, wobei das Getriebe (G) einen Nebenantrieb (G2) umfasst und wobei die Nutzturbine mittels des Nebenantriebs (G2) wirksam mit der sekundären Antriebswelle des Getriebes (G1) verbunden ist.

9. System nach einem der Ansprüche 7 oder 8, wobei die Nutzturbine mittels geeigneter Zahnradantriebe oder mittels eines CVT-Getriebes, das durch die Verarbeitungsmittel (ECU) gesteuert wird, wirksam mit der sekundären Antriebswelle des Getriebes (G1) verbunden ist.

10. System nach einem der vorhergehenden Ansprüche 7 bis 9, wobei der Verteiler der Nutzturbine einstellbare Schaufeln aufweist und wobei die Schaufeln so eingestellt werden können, dass ein Aufprallwinkel des Abgases auf die Turbinenschaufeln derart ist, dass die Drehbewegung des Laufrades verlangsamt wird, was ein Bremsdrehmoment auf den Fahrzeug-Antriebsstrang überträgt.

11. System nach Anspruch 10, wobei die Verarbeitungsmittel dafür eingerichtet sind, die Schaufelausrichtung so zu steuern, dass die Nutzturbine während des Aufwärmens der Reinigungsanlage (ATS) und/oder unter Motorbremsbedingungen ein negatives Drehmoment erzeugen kann.

12. System nach einem der vorhergehenden Ansprüche 7 bis 11, wobei die Verarbeitungsmittel (ECU) dafür eingerichtet sind, die Nutzturbine zu steuern, um eine mechanische Energie, die durch die Nutzturbine zurückgewonnen und zu dem Fahrzeug-Antriebsstrang während eines Gangwechsels übertragen wird, zu steigern oder zu maximieren.

13. System nach Anspruch 12, wobei die Verarbeitungsmittel (ECU) dafür eingerichtet sind, den Verbrennungsmotor ein dynamisches Gleichgewicht bei einer höheren Last auf Grund eines Gegendrucks, der durch die Nutzturbine erzeugt wird, was den Beitrag der Nutzturbine während des Gangwechsels steigert, finden zu lassen.

14. System nach einem der vorhergehenden Ansprüche 9 bis 13, wobei die Nutzturbine mittels eines CVT-Getriebes, das durch die Verarbeitungsmittel (ECU) gesteuert wird, wirksam mit der sekundären Antriebswelle des Getriebes (G1) verbunden ist, wobei die Verarbeitungsmittel dafür eingerichtet sind, das CVT-Getriebe so zu steuern, dass die Drehgeschwindigkeit der Nutzturbine derart ist, dass ihr Wirkungsgrad optimal ist.

15. Steuerungsverfahren eines verbesserten Turbo-Compound-Systems nach einem der vorhergehenden Ansprüche, das den Schritt des Einstellens der veränderlichen Geometrie der Nutzturbine umfasst:
- während eines Aufwärmschrittes der ATS, um den Vorgang selbst schneller zu machen, und/oder,
- während eines thermischen Beharrungszustandes der einzelnen Abgasreinigungsanlage (ATS), um die Einspritzung wässriger Lösung auf Harnstoffbasis zu minimieren, und/oder
- während eines thermischen Beharrungszustandes der einzelnen Abgasreinigungsanlage (ATS), um die Abgasrückführung AGR zu erleichtern, und/oder
- während eines thermischen Beharrungszustandes der einzelnen Abgasreinigungsanlage (ATS), um eine vorbestimmte mechanische Energie mittels der Nutzturbine zurückzugewinnen, und/oder
- während eines Motorbremszustandes, um die Pumparbeit des Verbrennungsmotors zu steigern.

16. Verfahren nach Anspruch 15, wobei die Nutzturbine einstellbare Schaufeln aufweist und wirksam mit dem Fahrzeug-Antriebsstrang verbunden ist, wobei das Steuerungsverfahren einen Schritt des Einstellens der Ausrichtung der Schaufeln so, dass die Nutzturbine während des Aufwärmens der Abgasreinigungsanlage (ATS) und/oder im Motorbremsbetrieb Bremsdrehmoment erzeugt und überträgt.

17. Verfahren nach Anspruch 15, wobei, falls das Turbo-Compound-System zweite Kraftstoffeinspritzmittel (EJF) umfasst, die Verarbeitungsmittel dafür eingerichtet sind,
- wenigstens eine Kraftstoffeinspritzung zu befehlen und
- einen Ausflussquerschnitt der Nutzturbine (PT) entsprechend zu verringern,
um eine mechanische Energie, die durch die Nutzturbine (PT) zurückgewonnen wird, zu steigern.

18. Verfahren nach einem der vorhergehenden Ansprüche, wobei, falls das Turbo-Compound-System erste Mittel (EJU) zum Einspritzen einer wässrigen Lösung auf Harnstoffbasis, die an der Abgasleitung (IL) stromaufwärts von der ATS angeordnet sind und durch die Verarbeitungsmittel gesteuert werden, die Verarbeitungsmittel dafür eingerichtet sind,
- wenigstens eine Veränderung der Einspritzung einer wässrigen Lösung auf Harnstoffbasis zu befehlen und
- einen Ausflussquerschnitt der Nutzturbine (PT) entsprechend zu verringern,
um eine mechanische Energie, die durch die Nutzturbine (PT) zurückgewonnen wird, zu steigern.

19. Landfahrzeug, das ein Turbo-Compound-System nach einem der Ansprüche 1 bis 14 umfasst.

20. Rechnerprogramm, das Programmcodemittel umfasst, die dafür eingerichtet sind, die Schritte nach einem der Ansprüche 15 bis 18 auszuführen, wenn ein solches Programm auf einem Rechner laufen gelassen wird.

21. Rechnerlesbare Mittel, die ein aufgezeichnetes Programm umfassen, wobei die rechnerlesbaren MittelProgrammcodemittel umfassen, die dafür eingerichtet sind, die Schritte nach einem der Ansprüche 15 bis 18 auszuführen, wenn das Programm auf einem Rechner laufen gelassen wird.

## Revendications

1. Système à turbo-récupération amélioré, le système comprenant :
- un moteur à combustion interne (E) qui comporte un collecteur d'échappement (Ex) et une ligne d'échappement (IL) qui est connectée au collecteur d'échappement et qui lui est adjacente,
- un unique système de purification de gaz d'échappement (ATS) qui est agencé sur ladite ligne d'échappement (IL),
- une turbine de puissance (PT), qui est agencée sur la ligne d'échappement (IL) en aval dudit unique système de purification de gaz échappement (ATS),
dans lequel : la turbine de puissance (PT) présente une géométrie variable, commandée par un moyen de traitement (ECU), afin d'augmenter une contre-pression moyenne sur la ligne d'échappement (IL), dans lequel ledit système de purification comprend un SCR et un premier moyen (EJU) pour injecter une solution aqueuse à base d'urée qui est commandé par ledit moyen de traitement (ECU), et **caractérisé en ce que** ledit moyen de traitement (ECU) est adapté de manière à ce qu'il commande ladite turbine de puissance et ledit premier moyen d'injection (EJU) afin de maximiser une énergie mécanique qui est récupérée par la turbine de puissance, en augmentant en même temps une contre-pression au niveau de la ligne d'échappement (IL) et un débit d'écoulement de la solution aqueuse à base d'urée, afin d'exploiter un cycle de Rankine ouvert.

2. Système selon la revendication 1, dans lequel ladite ligne d'échappement (IL) comprend un filtre de matière particulaire (DPF) et un second moyen (EJF) pour injecter du carburant dans la ligne d'échappement, en amont dudit filtre de matière particulaire, commandé par ledit moyen de traitement (ECU), et dans lequel ledit moyen de traitement (ECU) est adapté pour commander ladite turbine de puissance et ledit second moyen d'injection (EJF) afin de maximiser une énergie mécanique qui est récupérée par la turbine de puissance, en augmentant en même temps la contre-pression au niveau de la ligne d'échappement (IL) et un débit d'écoulement du carburant injecté, afin d'exploiter un cycle de Bryton ouvert.

3. Système selon l'une quelconque des revendications qui précèdent, dans lequel ledit moteur à combustion interne (E) est en outre muni d'un collecteur d'admission et d'une unité de turbocompresseur de suralimentation (T, C) qui comporte une première turbine (T) qui est agencée en aval du collecteur d'échappement (Ex) et en amont dudit système de purification (ATS).

4. Système selon l'une quelconque des revendications qui précèdent, dans lequel ledit moteur à combustion interne (E) est en outre muni d'un moyen de recirculation du gaz d'échappement ou EGR et dans lequel ledit moyen de traitement (ECU) est adapté pour commander ladite géométrie variable de ladite turbine de puissance afin de faciliter une recirculation du gaz d'échappement.

5. Système selon la revendication 4, dans lequel ledit moyen EGR est du type hautes pressions et/ou basses pressions.

6. Système selon l'une quelconque des revendications qui précèdent, dans lequel ladite turbine de puissance est connectée de manière fonctionnelle à un générateur électrique de manière à générer de l'énergie électrique ou dans lequel ladite turbine de puissance est connectée de manière fonctionnelle à la transmission du véhicule.

7. Système selon la revendication 6, dans lequel ledit moteur à combustion interne (E) comprend une boîte de vitesse (G) et dans lequel la turbine de puissance est connectée de manière fonctionnelle en aval de la boîte de vitesse, de préférence à un arbre de transmission secondaire de la boîte de vitesse (G1).

8. Système selon la revendication 7, dans lequel ladite boîte de vitesse (G) comprend une prise de force (G2) et dans lequel ladite turbine de puissance est connectée de manière fonctionnelle à l'arbre de transmission secondaire de la boîte de vitesse (G1) au moyen de ladite prise de force (G2).

9. Système selon l'une des revendications 7 ou 8, dans lequel ladite turbine de puissance est connectée de manière fonctionnelle à l'arbre de transmission secondaire de la boîte de vitesse (G1) au moyen d'engrenages appropriés ou au moyen d'une boîte de vitesse CVT qui est commandée par ledit moyen de traitement (ECU).

10. Système selon l'une quelconque des revendications qui précèdent 7 à 9, dans lequel le distributeur de ladite turbine de puissance comporte des aubes réglables et dans lequel les aubes peuvent être réglées de telle sorte qu'un angle d'impact du gaz d'échappement sur les aubes de turbine soit tel qu'il ralentisse le mouvement de rotation de l'arbre de transmission, en transférant un couple de freinage à la transmission du véhicule.

11. Système selon la revendication 10, dans lequel ledit moyen de traitement est adapté pour commander l'orientation des aubes de telle sorte que la turbine de puissance puisse générer un couple négatif pendant la mise en service du système de purification (ATS) et/ou dans des conditions de frein moteur.

12. Système selon l'une quelconque des revendications qui précèdent 7 à 11, dans lequel ledit moyen de traitement (ECU) est adapté pour commander ladite turbine de puissance afin d'incrémenter ou de maximiser une énergie mécanique qui est récupérée par la turbine de puissance et qui est transférée à la transmission du véhicule pendant un changement de vitesse.

13. Système selon la revendication 12, dans lequel ledit moyen de traitement (ECU) est adapté pour faire en sorte que le moteur à combustion interne trouve un équilibre dynamique pour une charge plus élevée qui est due à une contre-pression qui est générée par la turbine de puissance, en amplifiant la contribution de la turbine de puissance pendant le changement de vitesse.

14. Système selon l'une quelconque des revendications qui précèdent 9 à 13, dans lequel ladite turbine de puissance est connectée de manière fonctionnelle à l'arbre de transmission secondaire de la boîte de vitesse (G1) au moyen d'une boîte de vitesse CVT qui est commandée par ledit moyen de traitement (ECU), ledit moyen de traitement est adapté pour commander ladite boîte de vitesse CVT de telle sorte que la vitesse de rotation de la turbine de puissance soit telle que son rendement soit optimum.

15. Procédé de commande d'un système à turbo-récupération amélioré selon l'une quelconque des revendications qui précèdent, comprenant l'étape qui consiste à régler ladite géométrie variable de la turbine de puissance :
- pendant une étape de mise en service de l'ATS, afin de faire en sorte que la procédure soit elle-même plus rapide et/ou
- pendant une condition thermique de régime établi du système de purification (ATS), afin de minimiser l'injection de la solution aqueuse à base d'urée et/ou
- pendant une condition thermique de régime établi du système de purification (ATS), afin de faciliter la recirculation du gaz d'échappement ou EGR et/ou
- pendant une condition thermique de régime établi du système de purification (ATS), afin de récupérer une énergie mécanique prédéfinie au moyen de la turbine de puissance et/ou
- pendant une condition de frein moteur, afin d'augmenter le travail de pompage du moteur à combustion interne.

16. Procédé selon la revendication 15, dans lequel, lorsque la turbine de puissance comporte des aubes réglables, et qu'elle est connectée de manière fonctionnelle à la transmission du véhicule, le procédé de commande comprend une étape qui consiste à régler une orientation des aubes de telle sorte que la turbine de puissance génère et transfère un couple de freinage à la transmission du véhicule pendant la mise en service du système de purification (ATS) et/ou lors d'un fonctionnement en frein moteur.

17. Procédé selon la revendication 16, dans lequel, si le système à turbo-récupération comprend un second moyen d'injection de carburant (EJF), ledit moyen de traitement (ECU) est adapté pour :
- commander moins une injection de carburant ; et
- réduire une section d'effusion de la turbine de puissance (PT) en conséquence, afin d'augmenter une puissance mécanique qui est récupérée par la turbine de puissance (PT).

18. Procédé selon l'une quelconque des revendications qui précèdent, dans lequel le système à turbo-récupération comprend un premier moyen (EJU) pour injecter une solution aqueuse à base d'urée qui est agencé sur ladite ligne d'échappement (IL) en amont dudit ATS et qui est commandé par ledit moyen de traitement, ledit moyen de traitement étant alors adapté pour :
- commander au moins une variation d'injection d'une solution aqueuse à base d'urée ; et
- réduire une section d'effusion de la turbine de puissance (PT) en conséquence, afin d'augmenter une puissance mécanique qui est récupérée par la turbine de puissance (PT).

19. Véhicule terrestre comprenant un système à turbo-récupération amélioré selon l'une quelconque des revendications 1 à 14.

20. Programme informatique comprenant un moyen de code de programme qui est adapté pour mettre en oeuvre les étapes selon l'une quelconque des revendications 15 à 18, lorsque ce programme est exécuté sur un ordinateur.

21. Moyen lisible par ordinateur comprenant un programme enregistré, ledit moyen lisible par ordinateur comprenant un moyen de code de programme qui est adapté de manière à ce qu'il réalise les étapes selon les revendications 15 à 18, lorsque ledit programme est exécuté sur un ordinateur.
